# EUROPÄISCHE PATENTSCHRIFT

(11) **EP 2 577 829 B1**
(45) Veröffentlichungstag und Bekanntmachung des Hinweises auf die Patenterteilung: **08.01.2020**
(21) Anmeldenummer: 11723877.4
(22) Anmeldetag: 25.05.2011
(51) Int. Cl.: H02J 3/00, G06Q 10/06, G06Q 50/06

(54) **VERFAHREN UND VORRICHTUNG ZUM ANPASSEN EINES PRODUKTIONSABLAUFPLANS FÜR EINEN PRODUKTIONSPROZESS**
METHOD AND SYSTEM FOR ADAPTING A PRODUCTION FLOW SCHEDULE FOR A PRODUCTION PROCESS
PROCÉDÉ ET DISPOSITIF POUR ADAPTER UN PLAN DE DÉROULEMENT DE PRODUCTION POUR UN PROCESSUS DE PRODUCTION

(30) Priorität: 02.06.2010 DE 102010022462
(43) Veröffentlichungstag der Anmeldung: 10.04.2013
(73) Patentinhaber: ABB Schweiz AG, 5400 Baden (CH)
(72) Erfinder: SCHUH, Lothar, 68723 Plankstadt (DE); STICH, Christian, 69493 Hirschberg-Leutershausen (DE)
(74) Vertreter: Marks, Frank
(86) Internationale Anmeldenummer: PCT/EP2011/002593
(87) Internationale Veröffentlichungsnummer: WO 2011/151031

(56) Entgegenhaltungen:
- EP-A1- 1 263 108
- EP-A1- 1 748 529
- US-A1- 2003 041 017
- US-A1- 2005 258 154
- US-A1- 2010 114 799

## Beschreibung

### Technisches Gebiet

Die Erfindung betrifft im Allgemeinen Produktionsplanungen, insbesondere die Steuerung einer Produktion einer Produktionsanlage, die z.B. Energie aus intelligenten Stromnetzen bezieht, basierend auf einem Produktionsablaufplan.

### Stand der Technik

Dezentrale regenerative Energiequellen stellen aufgrund von Umweltfaktoren, wie z.B. Windaufkommen, Wolken und dergleichen, nur unregelmäßig und schwer vorhersehbar Energie bereit. Durch den zunehmenden Einsatz dieser Energiequellen wird die Fehlanpassung zwischen der erzeugten Menge an elektrischer Energie und der verbrauchten Menge an elektrischer Energie zusehends größer. In der Vergangenheit wurde die elektrische Energie durch Kraftwerke gemäß ziemlich zuverlässigen Vorhersagen über das Verbrauchsverhalten von Industrie und Haushalten in der benötigten Menge erzeugt. Schätzungen zufolge werden jedoch in der Zukunft bis zu 30% der elektrischen Energie ohne jegliche Synchronisation mit der Nachfrage erzeugt.

Das zu dem Verbrauch unsynchronisierte Aufkommen elektrischer Energie muss von den Kraftwerksbetreibern bzw. Netzbetreibern entsprechend einer gesetzlichen Vorschrift abgenommen und ins Stromnetz eingespeist werden.

Da sich der Strompreis an der Verfügbarkeit von elektrischer Energie in dem Stromnetz orientiert, kann dies dazu führen, dass elektrische Energie aufgrund des Überangebots zu bestimmten Zeiten kostenlos zur Verfügung steht. Wenn beispielsweise Windkraftwerke eine große Menge elektrischer Energie während eines Sonntags erzeugen, steht dem keine ausreichende Nachfrage seitens der industriellen Verbraucher entgegen, die die größten Abnehmer elektrischer Energie darstellen. Es ergibt sich in der Regel keine Gelegenheit für die Industrie, Vorteile aus der Nutzung von günstiger elektrischer Energie zu ziehen. Andererseits besteht das oben beschriebene Problem vor allem in Ländern, bei denen die Abnahme von regenerativ erzeugter elektrischer Energie vorgeschrieben ist, auch dann, wenn dem Aufkommen elektrischer Energie keine entsprechende Nachfrage gegenübersteht.

Bislang werden einzelne Prozessschritte in Produktionsanlagen in vorbestimmten Zeitfenstern oder kontinuierlich ausgeführt, wobei die Abfolge und die zeitliche Anordnung einzelner Prozessschritte hinsichtlich Produktionsdurchlaufzeit bzw. - durchsatz optimiert sind.

In der EP 1 263 108 A1 wird beispielsweise eine Art Energiemanagementsystem vorgeschlagen mit welchem Arbeitsaufgaben, die in Haushalten von elektrischen Geräten, z.B. Waschmaschinen, Geschirrspülern oder Ladegeräten, erledigt werden, zeitlich je nach Energieangebot planbar sind.

In der US 2005/258 154 A1 ist ein Kontrollsystem zur Überwachung des Energieverbrauchs einer Vielzahl von Schweißern bzw. Schweißgeräten angegeben.

Aus der US 2003/041017A1 ist ein Managementprozess bekannt geworden bei welchem mehrere Energielieferanten und Energieverbraucher miteinander auf elektronischem Wege interagieren, um auf dem deregulierten Energie- und Strommarkt einen optimierten Betriebsablauf zu bewirken
In der EP 1 748 529 A1 ist ein Verfahren sowie ein entsprechendes System zur Prognose der benötigten Energiemenge eines industriellen Verbrauchers angegeben.

Aus der US 2010/114799 A1 ist ein Lastabfertigungs- oder Lastverteilungssystem bekannt geworden, das so konfiguriert ist, dass es als Reaktion auf algorithmische Software arbeitet, um einen optimierten Lastabfertigungs- oder Lastverteilungsplan zu erzeugen.

Es ist Aufgabe der vorliegenden Erfindung, ein Verfahren und eine Vorrichtung zum Erstellen eines Produktionsablaufplans zur Verfügung zu stellen, womit eine Produktionsanlage mit einer besseren Nutzung überschüssiger elektrischer Energie betrieben werden kann.

### Offenbarung der Erfindung

Diese Aufgabe wird durch das Verfahren zum Durchführen einer Produktionsplanung bzw. zum Anpassen eines Produktionsablaufplans gemäß Anspruch 1 sowie durch die Vorrichtung und das Produktionssystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Anpassen eines Produktionsablaufplans für einen oder mehrere Produktionsprozesse vorgesehen, die jeweils einen oder mehrere Prozessschritte aufweisen, die für ihre Ausführung Energie benötigen. Das Verfahren umfasst folgende Schritte:
- Identifizieren mindestens eines Verfügbarkeits-Zeitfensters, in dem eine vorgegebene Mindest-Energieverfügbarkeit vorliegt, innerhalb eines vorgegebenen Optimierungszeitraums basierend auf einer Verfügbarkeitsinformation, die eine prognostizierte Energie-Verfügbarkeit während des Optimierungszeitraums angibt;
- Bereitstellen einer Angabe zu einem oder mehreren flexiblen Prozessschritten, wobei der eine oder die mehreren flexiblen Prozessschritte diejenigen Prozessschritte angeben, die in mehreren alternativen Zeitfenstern innerhalb des Optimierungszeitraums ausführbar sind, ohne dass sich eine oder mehrere Optimierungsgrößen, die einer Erstellung des Produktionsablaufplans zugrunde liegen, verschlechtern; und
- für jeden der flexiblen Prozessschritte, zeitliches Umordnen des entsprechenden flexiblen Prozessschritts in eines der entsprechenden alternativen Zeitfenster, wenn dieses innerhalb des Verfügbarkeits-Zeitfensters liegt, um einen angepassten Produktionsablaufplan zu erhalten.

Eine Idee des obigen Verfahrens besteht darin, einzelne Prozessschritte des Produktionsprozesses, die zeitlich flexibel ausgeführt werden können, d.h. innerhalb eines ersten oder eines zweiten Zeitfensters durchgeführt werden können, für dasjenige Zeitfenster vorzusehen, in dem eine bestimmte oder höhere Energie-Verfügbarkeit besteht bzw. erwartet wird. Dazu werden zunächst aus einem Produktionsprozess diejenigen Prozessschritte mit Hilfe eines Produktionsablaufplans ermittelt, die innerhalb eines künftigen Zeitfensters durchgeführt werden sollen, um ein bestimmtes vorgegebenes Optimierungsziel zu erreichen. Zudem wird die prognostizierte Energie-Verfügbarkeit zum momentanen Zeitpunkt als auch der Zeitlauf der zu erwartenden Verfügbarkeit der elektrischer Energie innerhalb des künftigen Zeitfensters bereitgestellt, bzw. ermittelt.

Durch das zeitlichen Umordnen bzw. Verschieben eines oder mehrerer Prozessschritte in ein Zeitfenster, in dem eine hohe Energie-Verfügbarkeit, z.B. ein Überangebot an elektrischer Energie, vorliegt, dient einerseits dazu, die erzeugte elektrische Energie in einem Stromnetz besser auszunutzen, und, da sich die Menge überschüssiger Energie in einem Stromnetz auch in dem Strompreis niederschlägt, ermöglicht dies andererseits den Betreibern von Produktionsanlagen, die elektrische Energie zum Betreiben der Prozessschritte kostengünstiger zu beziehen, um so die Produktionskosten zu reduzieren.

Weiterhin kann die vorgegebene Mindest-Verfügbarkeit durch einen Verfügbarkeits-Schwellenwert bestimmt werden, der insbesondere einem Mittelwert der prognostizierten Verfügbarkeiten innerhalb des Optimierungszeitraums entsprechen kann.

Gemäß einer Ausführungsform kann die Energie-Verfügbarkeit den Überschuss von elektrischer Energie in einem Stromnetz angeben. Beispielsweise kann die Verfügbarkeit elektrischer Energie anhand eines Preises für eine Energiemengeneinheit angegeben sein.

Weiterhin kann vorgesehen sein, dass die alternativen Zeitfenster eines Prozessschrittes abhängig von einer Zustandsgröße des Prozessschrittes bestimmt werden, wobei insbesondere abhängig von einer momentanen Energie-Verfügbarkeit der flexible Prozessschritt sofort ausgeführt wird.

Es kann vorgesehen sein, dass der eine oder die mehreren flexiblen Prozessschritte diejenigen Prozessschritte angeben, die in mehreren alternativen Zeitfenstern innerhalb des Optimierungszeitraums ausführbar sind, ohne dass sich zumindest eine Optimierungsgröße um mehr als einen Optimierungsgrößen-Toleranzwert von einem Wert der Optimierungsgröße, der durch den ursprünglichen Produktionsablaufplan erreicht wird, abweicht.

Insbesondere kann der Schritt des jeweiligen zeitlichen Umordnens der entsprechenden flexiblen Prozessschritte abhängig von einer Wahrscheinlichkeit, die jeder prognostizierten Energie-Verfügbarkeit zugeordnet wird, durchgeführt werden, wobei insbesondere vorrangig diejenigen flexiblen Prozessschritte in entsprechende Zeitfenster zeitlich umgeordnet werden, bei denen die Wahrscheinlichkeit einer Energieverfügbarkeit über der Mindest-Energieverfügbarkeit am größten ist. Weiterhin können bei dem Schritt des jeweiligen zeitlichen Umordnens der entsprechenden flexiblen Prozessschritte diejenigen flexiblen Prozessschritte vorrangig berücksichtigt werden, die die größte Energieaufnahme aufweisen.

Gemäß einem weiteren Aspekt ist ein Produktionsplanungssystem zum Anpassen eines Produktionsablaufplans für einen oder mehrere Produktionsprozesse vorgesehen, die jeweils einen oder mehrere Prozessschritte aufweisen, die für ihre Ausführung Energie benötigen, wobei das Produktionsplanungssystem ausgebildet ist:
- um mindestens ein Verfügbarkeits-Zeitfenster, in dem eine vorgegebene Mindest-Energieverfügbarkeit vorliegt, innerhalb eines vorgegebenen Optimierungszeitraums basierend auf einer Verfügbarkeitsinformation zu identifizieren, die eine prognostizierte Energie-Verfügbarkeit während des Optimierungszeitraums angibt;
- um eine Angabe zu einem oder mehreren flexiblen Prozessschritten bereitzustellen, wobei der eine oder die mehreren flexiblen Prozessschritte diejenigen Prozessschritte angeben, die in mehreren alternativen Zeitfenstern innerhalb des Optimierungszeitraums ausführbar sind, ohne dass sich eine oder mehrere Optimierungsgrößen, die einer Erstellung des Produktionsablaufplans zugrunde liegen, verschlechtern; und
- um, für jeden der flexiblen Prozessschritte, den entsprechenden flexiblen Prozessschritt in eines der entsprechenden alternativen Zeitfenster zeitlich umzuordnen, wenn dieses innerhalb des Verfügbarkeits-Zeitfensters liegt, um einen angepassten Produktionsablaufplan zu erhalten.
Gemäß einem weiteren Aspekt ist ein Produktionssystem mit einem oder mehreren Produktionsprozessen und mit dem obigen Produktionsplanungssystem vorgesehen.

Gemäß einem weiteren Aspekt ist ein Computerprogrammprodukt vorgesehen, das einen Programmcode aufweist, der, wenn er auf einer Datenverarbeitungseinheit ausgeführt wird, das obige Verfahren zum Anpassen eines Produktionsablaufplans ausführt.

### Kurzbeschreibung der Zeichnungen

Bevorzugte Ausführungsformen werden nachfolgend anhand der beigefügten Zeichnungen näher erläutert. Es zeigen:
- Figur 1: eine schematische Darstellung von Produktionsprozessen jeweils mit mehrere Prozessschritten, die gesteuert von einer Produktionssteuereinheit durchgeführt werden; und
- Figur 2: ein Flussdiagramm zur Veranschaulichung eines Verfahrens zum Erstellen oder Anpassen eines Produktionsablaufplans basierend auf einer Verfügbarkeitsinformation von elektrischer Energie.

### Beschreibung von Ausführungsformen

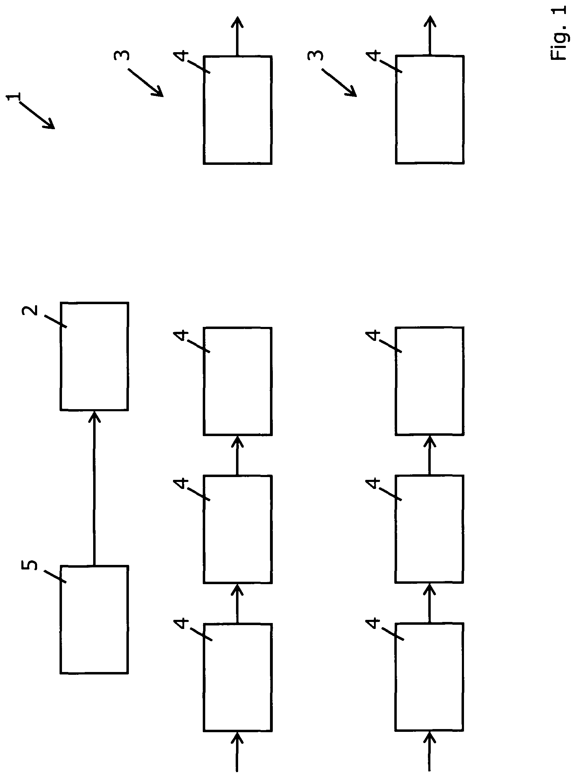

Figur 1 zeigt eine schematische Darstellung eines Produktionssystems 1 mit einer Produktionssteuereinheit 2, die einen oder mehrere Produktionsprozesse 3 überwacht und steuert. Jeder der Produktionsprozesse 3 umfasst eine Abfolge von einem oder mehreren Prozessschritten 4.Die Produktionsprozesse 3 dienen dazu, aus einem oder mehreren Rohprodukten oder Zwischenprodukten ein oder mehrere Endprodukte herzustellen. Die Prozessschritte 4 benötigen zu ihrer Ausführung Energie, im vorliegenden Ausführungsbeispiel elektrische Energie.

Die Produktionssteuereinheit 2 ist mit einem Produktionsplanungssystem 5 verbunden, das der Produktionssteuereinheit 2 Informationen über die zeitliche Abfolge der einzelnen Prozessschritte 4 zur Verfügung steht. Die Information beinhaltet für jeden Prozessschritt 4 eine Startzeit und Vorgabegrößen für den betreffenden Prozessschritt, so dass die Produktionssteuereinheit 2 den betreffenden Prozessschritt zu dem vorgegebenen Startzeitpunkt initiieren kann und an die dem Prozessschritt zugehörige Produktionsausstattung die Vorgabegrößen, davon abgeleitete Größen oder dergleichen übermittelt.

Das Produktionsplanungssystem 5 erstellt einen Produktionsablaufplan abhängig von bekannten Produktionsparametern der einzelnen Prozessschritte 4 und abhängig von einer Optimierungsfunktion, die die Produktionsprozesse 3 hinsichtlich einer oder mehrere bestimmter Größen optimiert. Das Optimieren erfolgt durch geeignetes zeitliches Anordnen der einzelnen Prozessschritte 4, so dass das Endprodukt gemäß einem vorgegebenen Optimierungsziel, z.B. in der vorgegebenen Zeit und/oder in der vorgegebenen Stückzahl und/oder Qualität hergestellt werden kann. Beispielsweise erfolgt das Optimieren hinsichtlich der Produktionszeit eines herzustellenden Produktes, die minimiert werden soll. Das Optimieren wird anhand bekannter Optimierungsverfahren durchgeführt, die aus dem Stand der Technik bekannt sind.

Die einzelnen Prozessschritte 4 benötigen zu ihrer Ausführung elektrische Energie, deren Menge erheblich von der Art des betreffenden Prozessschrittes abhängt. Zudem weisen die einzelnen Prozessschritte 4 hinsichtlich des Zeitraumes, in dem diese durchgeführt werden können, ohne dass sich die Fertigstellung des Endproduktes verzögert oder die Anzahl der innerhalb eines Zeitraumes hergestellten Endprodukte verringert, eine höhere oder eine geringere Flexibilität auf. D.h. ein Prozessschritt 4 kann u.U. in mehreren, sich überlappenden oder sich nicht überlappenden alternativen Zeitfenstern durchgeführt werden, ohne dass das Ergebnis des Produktionsprozesses 3 bzw. der mehreren Produktionsprozesse 3 hinsichtlich der einen oder der mehreren Optimierungsgrößen beeinträchtigt wird.

Wie Eingangs beschrieben, variiert die Verfügbarkeit von elektrischer Energie aufgrund des zunehmenden Einsatzes von unsynchronisierten elektrischen Energiequellen künftig stärker, so dass es Zeitperioden gibt, in denen viel ungenutzte elektrische Energie in den Stromnetzen zur Verfügung steht. Obwohl intelligente Stromnetze versuchen, die elektrische Energie an geeigneter Stelle zu verbrauchen bzw. zu speichern, kann dieser Ansatz jedoch das nahezu zufällige Aufkommen elektrischer Energie in der Zukunft nicht vollständig auffangen.

Bei intelligenten Stromnetzen besteht die Möglichkeit, eine Verfügbarkeitsinformation darüber zu enthalten, wie die Verfügbarkeit der elektrischen Energie momentan ist, d.h. eine Angabe über das örtliche Aufkommen und die Menge an überschüssiger elektrischer Energie. Ferner kann eine Verfügbarkeitsinformation auch Angaben darüber enthalten, wie sich in der näheren Zukunft, d.h. beispielsweise innerhalb der nächsten 24 bis 28 Stunden, die Verfügbarkeit elektrischer Energie in dem Stromnetz sowohl zeitlich und örtlich entwickeln wird und in welcher Höhe diese jeweils vorliegt. Insbesondere umfasst die Verfügbarkeitsinformation auch eine Angabe darüber, in welchem Zeitraum und für welche Zeitdauer ein Überschuss an elektrischer Energie vorliegt, oder diese Angabe ist daraus ableitbar. Zudem ist es möglich, dass die Verfügbarkeitsinformation Angaben darüber enthält, mit welchen Wahrscheinlichkeiten eine prognostizierte Verfügbarkeit zu einem Zeitpunkt oder in einem Zeitraum in der Zukunft vorliegen wird. Diese Angaben können beispielsweise aus Wettervorhersagen und dergleichen abgeleitet werden. Die Verfügbarkeitsinformation wird dem Produktionsplanungssystem 5 zur Verfügung gestellt. Die Verfügbarkeitsinformation kann über das intelligente Stromnetz selbst oder von anderen Quellen erhalten werden.

Neben der bereitgestellten Verfügbarkeitsinformation, die angibt, wie die momentane Verfügbarkeit von elektrischer Energie und die prognostizierte Verfügbarkeit der elektrischen Energie innerhalb eines künftigen Optimierungszeitraumes ist, werden dem Produktionsplanungssystem 5 auch Prozessparameter bereitgestellt. Die Verfügbarkeitsinformation kann die Angaben über die momentane Verfügbarkeit von elektrischer Energie und die prognostizierte Verfügbarkeit der elektrischen Energie in Form eines momentanen bzw. prognostizierten Preises für elektrische Energie z.B. für in Preis pro kWh angeben. Insbesondere ist dieser Preis variabel und hängt erheblich von der Verfügbarkeit und der Wahrscheinlichkeit ab, dass die Prognosen über die Verfügbarkeit elektrischer Energie zutreffen.

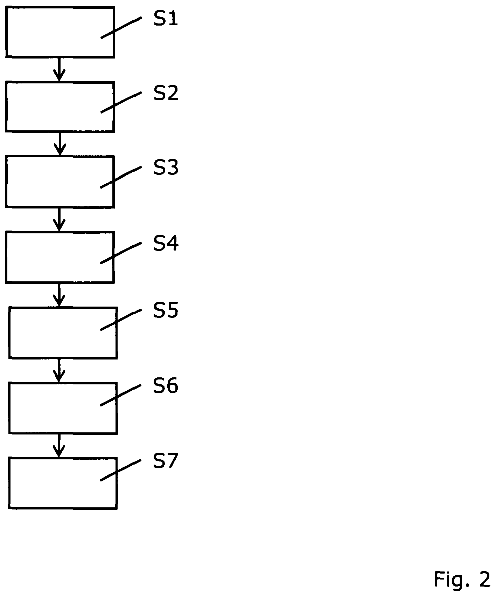

In Figur 2 ist anhand eines Flussdiagramms ein Verfahren zum Anpassen eines Produktionsablaufplanes für einen oder mehrere Produktionsprozesse dargestellt. Der Produktionsablaufplan wird mit Hilfe der Produktionssteuereinheit 2 durchgeführt.

In Schritt S1 wird eine Verfügbarkeitsinformation über die Verfügbarkeit elektrischer Energie über das Stromnetz oder das Internet oder eine sonstige Informationsquelle empfangen. Die Verfügbarkeitsinformation umfasst Angaben zu einer momentanen Verfügbarkeit von elektrischer Energie sowie über die prognostizierte Verfügbarkeit von elektrischer Energie während eines in der Zukunft liegenden Optimierungszeitraums. Insbesondere kann die Zuverlässigkeit der Angabe über die prognostizierte Verfügbarkeit elektrischer Energie in dem Optimierungszeitraum mit Wahrscheinlichkeiten belegt sein, die beispielsweise anhand von Wetterprognosen und dergleichen erstellt worden sind.

Anhand der Wahrscheinlichkeiten und der Verfügbarkeiten elektrischer Energie werden in Schritt S2 bestimmte Zeitfenster innerhalb des Betrachtungszeitraumes ermittelt, in denen die Aufnahme elektrischer Energie erhöht werden kann, da dort der Preis für elektrische Energie niedrig ist, bzw. in denen ein Überschuss elektrischer Energie vorliegt. Die Zeitfenster können beispielsweise ermittelt werden, indem die in der Verfügbarkeitsinformation enthaltene Verfügbarkeitsangabe für das betreffende Zeitfenster mit einem Verfügbarkeitsschwellenwert verglichen wird und die Zeitfenster als diejenigen Zeitperioden ermittelt werden, in denen der Verfügbarkeitsschwellenwert unterschritten wird. Der Verfügbarkeitsschwellenwert kann fest vorgegeben sein oder anhand der prognostizierten Verfügbarkeit von elektrischer Energie ermittelt werden. Beispielsweise kann der Verfügbarkeitsschwellenwert einem Mittelwert der Energieverfügbarkeit in dem Optimierungszeitraum entsprechen oder von diesem abhängen. Es sind auch andere Möglichkeiten denkbar, mit denen die Zeitfenster ermittelt werden können.

Als Ergebnis ergeben sich Zeitfenster, in denen ein möglichst hoher Energieverbrauch der Produktionsprozesse 3 gewünscht ist, da zu diesen Zeitfenstern die Energieverfügbarkeit an höchsten ist. Eine Verlagerung von einzelnen Prozessschritten in diese Zeitfenster kann die Zeiten des Energieverbauchs mit den Zeiten, in denen überschüssige Energie zur Verfügung steht, synchronisieren. Da der Strompreis in der Regel diese Verfügbarkeit widerspiegelt, kann der Betreiber der Produktionsanlage aufgrund der niedrigeren Kosten für die elektrische Energie die Produktionskosten senken.

In Schritt S3 werden anhand des Produktionsablaufplanes für den bestimmten Optimierungszeitraum, der von dem Produktionsplanungssystem 5 vorgegeben wird, die Prozessschritte 4, die eine zeitliche Flexibilität aufweisen, als flexible Prozessschritte ermittelt, d.h. Prozessschritte, die in alternativen Zeitfenstern durchgeführt werden können, ohne dass von dem dem Produktionsablaufplan zugrundeliegenden Optimierungsziel abgewichen wird, d.h. ohne dass sich die Optimierungsgröße, die anhand eines dem anfänglichen Produktionsablaufplan zugrundeliegenden Optimierungsverfahren ermittelt worden ist, verschlechtert. Beispielsweise werden die Prozessschritte 4 ermittelt, die in alternativen Zeitfenstern durchgeführt werden können, ohne dass sich die gesamte Produktionszeit des Endproduktes oder der Durchsatz des Produktionsprozesses ändert bzw. verschlechtert.

Insbesondere können die flexiblen Prozessschritte diejenigen Prozessschritte angeben, die in mehreren alternativen Zeitfenstern innerhalb des Optimierungszeitraums ausführbar sind, ohne dass sich zumindest eine Optimierungsgröße um mehr als einen absolut oder relativ vorgegebenen Optimierungsgrößen-Toleranzwert von einem Wert der Optimierungsgröße, der durch die Implementierung des ursprünglichen (anfänglichen) Produktionsablaufplans erreicht würde, abweicht.

In Schritt S4 werden die alternativen Zeitfenster, in denen Prozessschritte alternativ ausgeführt werden können, mit den in Schritt S2 bestimmten Zeitfenstern einer hohen Energieverfügbarkeit verglichen und in Schritt S5 diejenigen flexiblen Prozessschritte 4 ermittelt, die ,abweichend von dem bisherigen Produktionsablaufplan, in eines der Zeitfenster mit hoher Energieverfügbarkeit verschoben werden können. Eine Entscheidung über diejenigen Prozessschritte 4, deren Durchführung flexibel zwischen alternativen Zeitfenstern verschoben werden können, kann auch berücksichtigen, ob die Prozessschritte während des Ablaufes des einzelnen Prozessschrittes unterbrochen werden können, z.B. für den Fall, dass die Verfügbarkeit elektrischer Energie plötzlich abnimmt und den Verfügbarkeitsschwellenwert unterschreitet, bzw. der Preis einen Energiepreisschwellenwert übersteigt.

In einem nachfolgenden Schritt S6 wird ein modifizierter Produktionsablaufplan erstellt, bei denen die zuvor in Schritt S5 identifizierten flexiblen Prozessschritte in die entsprechenden alternativen Zeitfenster verschoben werden, wenn jeweils in dem ursprünglichen Zeitfenster eines der identifizierten Prozessschritte eine geringere Verfügbarkeit elektrischer Energie vorliegt als in dem alternativen Zeitfenster, das dem betreffenden Prozessschritt gemäß Schritt S5 zugeordnet wird.

Weiterhin kann das zeitliche Umordnen der entsprechenden flexiblen Prozessschritte abhängig von einer Wahrscheinlichkeit, die jeder prognostizierten Verfügbarkeit elektrischer Energie zugeordnet wird, durchgeführt werden. Insbesondere können vorrangig diejenigen flexiblen Prozessschritte in entsprechende Zeitfenster zeitlich verschoben werden, bei denen die Wahrscheinlichkeit einer Energieverfügbarkeit über dem Verfügbarkeits-Schwellenwert am größten ist.

In einem Schritt S7 wird überprüft, ob die Verschiebung der Prozessschritte 4 in Schritt S6 mit dem gesamten Produktionsprozess so interferiert, dass sich eine zu Optimierungsgröße (z.B. Durchsatz, Produktionszeit usw.) verschlechtert hat. Dies wird für jeden, zuvor in Schritt S6 zeitlich verschobenen Prozessschritt durchgeführt und die Verschiebung nicht vorgenommen, wenn eine Verschlechterung der Optimierungsgröße festgestellt worden ist.

Das oben allgemein beschriebene Verfahren zum Optimieren eines oder mehrerer Produktionsprozesse 3 hinsichtlich einer Verfügbarkeitsinformation, die eine Verfügbarkeit elektrischer Energie angibt, kann beispielsweise in einem Spanplattenwerk verwendet werden. In einem Spanplattenwerk werden 30% der elektrischen Energie für die mechanische Holzbearbeitung aufgewendet, bei der Holzspäne aus Baumstämmen hergestellt werden. Aufgrund von vorhergesagten Nachtstürmen, die zu einer hohen Energieverfügbarkeit aufgrund von an das Stromnetz angeschlossenen Windkraftwerken führen kann, kann das Produktionsplanungssystem 5 anhand der bereitgestellten Vorhersagedaten und Prozessparameter entscheiden, ob ein Vorteil besteht, das Herstellen der Holzspäne in ein alternatives Zeitfenster zu verlegen und z.B. während der Nacht durchzuführen, auch unter Beachtung des Lagerbestandes. Das Produktionsplanungssystem 5 kann dann den Produktionsprozess 3 bzw. die Produktionsprozesse 3 entsprechend anpassen.

Gemäß einem weiteren Beispiel kann das obige Verfahren zum Anpassen eines Produktionsablaufplans große Kühlhäuser betreffen, bei denen die Kühlung auf eine bestimmte Temperatur sehr energieaufwändig ist. In diesem Fall kann das Bereithalten von zu kühlenden Waren als Produktionsprozess bzw. als Teil davon angesehen werden. Ein Steuersystem kann die Vorhersage über die Verfügbarkeit der elektrischen Energie dazu verwenden, den Kühlprozess zu starten.

In der Regel werden derartige Kühlprozesse mit Hilfe einer Zweipunkt-Regelung gesteuert. D.h. die Kühleinrichtung zum Kühlen des Gebäudes wird eingeschaltet, sobald die Temperatur eine erste Temperaturschwelle überschreitet, und abgeschaltet, sobald die Temperatur eine zweite Temperaturschwelle, die unterhalb der ersten Temperaturschwelle liegt, unterschreitet. Abhängig von der Verfügbarkeit der elektrischen Energie kann sowohl die erste Temperaturschwelle als auch die zweite Temperaturschwelle angepasst werden, wenn eine hohe Verfügbarkeit elektrischer Energie vorliegt und im umgekehrten Fall angehoben werden, sobald eine geringe Verfügbarkeit elektrischer Energie vorliegt. Das Verschieben der Temperaturschwellen führt zu einer relativen Verschiebung der Zeitfenster, in denen die Kühlung eingeschaltet wird. Dadurch, dass die Kühlung im Falle einer hohen Verfügbarkeit elektrischer Energie den Kühlraum auf eine niedrigere Temperatur kühlt, kann mehr Flexibilität gewonnen werden. D.h. wenn die Energieverfügbarkeit abnimmt, kann länger gewartet werden, bis die Kühlung wieder eingeschaltet wird, da die Temperatur des Kühlraumes erst später die kritische Temperatur überschreitet, bei der die Kühlung unabhängig von der Verfügbarkeit elektrischer Energie bzw. von dem Strompreis wieder eingeschaltet werden muss.

Als weiteres Bespiel wäre das Aufladen von im Produktionsprozess benötigter Batterien zu nennen, z.B. zum Betreiben von Gabelstaplern oder anderen Fahrzeugen. Die Zeitfenster zum Aufladen der Batterien können ebenfalls abhängig von der Energieverfügbarkeit gewählt werden. Beispielsweise kann das Aufladen von Batterien von Gabelstaplern während der Nacht oder während des Wochenendes durchgeführt werden, wenn die Energieverfügbarkeit hoch ist.

Die vorliegende Erfindung umfasst dabei auch beliebige Kombinationen bevorzugter Ausführungsformen sowie einzelner Ausgestaltungsmerkmale oder Weiterbildungen, sofern diese sich nicht gegenseitig ausschließen.

### Bezugszeichenliste

- 1: Produktionssystem
- 2: Produktionssteuereinheit
- 3: Produktionsprozess
- 4: Prozessschritt
- 5: Produktionsplanungssystem

## Patentansprüche

1. Verfahren zum Anpassen eines Produktionsablaufplans für einen oder mehrere Produktionsprozesse (3), die dazu dienen, aus einem oder mehreren Rohprodukten oder Zwischenprodukten ein oder mehrere Endprodukte herzustellen und die jeweils einen oder mehrere Prozessschritte (4) aufweisen, welche für ihre Ausführung Energie benötigen, wobei der Produktionsablaufplan abhängig von einer Optimierungsfunktion erstellt ist, welche den einen oder die mehreren Produktionsprozesse (3) hinsichtlich einer oder mehrerer Optimierungsgrößen optimiert, mit folgenden Schritten:
- Identifizieren (S2) mindestens eines Verfügbarkeits-Zeitfensters, in dem eine vorgegebene Mindest-Energieverfügbarkeit vorliegt, innerhalb eines vorgegebenen Optimierungszeitraums basierend auf einer Verfügbarkeitsinformation, die eine prognostizierte Energie-Verfügbarkeit während des Optimierungszeitraums angibt,
und **dadurch gekennzeichnet, dass** das
- Ermitteln (S3) derjenigen Prozessschritte (4), die eine zeitliche Flexibilität aufweisen, als flexible Prozessschritte (4), welche in alternativen Zeitfenstern innerhalb des Optimierungszeitraums ausführbar sind, ohne dass zumindest eine der Optimierungsgrößen um mehr als einen Optimierungsgrößen-Toleranzwert von einem Wert der Optimierungsgröße, der durch den ursprünglichen Produktionsablaufplan erreicht wird, abweicht; und
- für jeden der flexiblen Prozessschritte (4), zeitliches Umordnen (S6) des flexiblen Prozessschritts (4) in eines der entsprechenden alternativen Zeitfenster, wenn dieses innerhalb des Verfügbarkeits-Zeitfensters liegt und wenn in dem ursprünglichen Zeitfenster des flexiblen Prozessschritts (4) eine geringere Verfügbarkeit an Energie vorliegt als in dem alternativen Zeitfenster, um einen angepassten Produktionsablaufplan zu erhalten, und
- der Schritt des jeweiligen zeitlichen Umordnens der entsprechenden flexiblen Prozessschritte (4) abhängig von einer Wahrscheinlichkeit, die jeder prognostizierten Energie-Verfügbarkeit zugeordnet wird, durchgeführt wird, wobei insbesondere vorrangig diejenigen flexiblen Prozessschritte (4) in entsprechende Zeitfenster zeitlich umgeordnet werden, bei denen die Wahrscheinlichkeit einer Energieverfügbarkeit über der Mindest-Energieverfügbarkeit am größten ist.

2. Verfahren nach Anspruch 1, wobei die vorgegebene Mindest-Verfügbarkeit durch einen Verfügbarkeits-Schwellenwert bestimmt wird, der insbesondere einem Mittelwert der prognostizierten Verfügbarkeiten innerhalb des Optimierungszeitraums entspricht.

3. Verfahren nach Anspruch 1 oder 2, wobei die Energie-Verfügbarkeit den Überschuss von elektrischer Energie in einem Stromnetz angibt.

4. Verfahren nach einem der Ansprüche 1 bis 4, wobei die alternativen Zeitfenster eines Prozessschrittes (4) abhängig von einer Zustandsgröße des Prozessschrittes (4) bestimmt werden.

5. Verfahren nach einem der Ansprüche 1 bis 4, wobei bei der Entscheidung über diejenigen Prozessschritte (4), deren Durchführung flexibel zwischen alternativen Zeitfenstern verschoben werden können, auch berücksichtigt wird, ob die Prozessschritte während des Ablaufes des einzelnen Prozessschrittes unterbrochen werden können.

6. Verfahren nach einem der Ansprüche 1 bis 5, wobei bei dem Schritt des jeweiligen zeitlichen Umordnens der entsprechenden flexiblen Prozessschritte (4) diejenigen flexiblen Prozessschritte (4) vorrangig berücksichtigt werden, die die größte Energieaufnahme aufweisen.

7. Produktionsplanungssystem (5) zum Anpassen eines Produktionsablaufplans für einen oder mehrere Produktionsprozesse (3), die dazu dienen, aus einem oder mehreren Rohprodukten oder Zwischenprodukten ein oder mehrere Endprodukte herzustellen und die jeweils einen oder mehrere Prozessschritte (4) aufweisen, die für ihre Ausführung Energie benötigen, wobei das Produktionsplanungssystem (5) ausgebildet ist:
- um den Produktionsablaufplan zu erstellen abhängig von einer Optimierungsfunktion, welche den einen oder die mehreren Produktionsprozesse (3) hinsichtlich einer oder mehrerer Optimierungsgrößen optimiert,
- um mindestens ein Verfügbarkeits-Zeitfenster zu identifizieren, in dem eine vorgegebene Mindest-Energieverfügbarkeit vorliegt, innerhalb eines vorgegebenen Optimierungszeitraums basierend auf einer Verfügbarkeitsinformation, die eine prognostizierte Energie-Verfügbarkeit während des Optimierungszeitraums angibt,
und **dadurch gekennzeichnet, dass**
- um diejenigen Prozessschritte (4), die eine zeitliche Flexibilität aufweisen, als flexible Prozessschritte zu ermitteln, welche in alternativen Zeitfenstern innerhalb des Optimierungszeitraums ausführbar sind, ohne dass zumindest eine der Optimierungsgrößen um mehr als einen Optimierungsgrößen-Toleranzwert von einem Wert der Optimierungsgröße, der durch den ursprünglichen Produktionsablaufplan erreicht wird, abweicht; und
- um, für jeden der flexiblen Prozessschritte (4), den flexiblen Prozessschritt (4) in eines der entsprechenden alternativen Zeitfenster zeitlich umzuordnen, wenn dieses innerhalb des Verfügbarkeits-Zeitfensters liegt und wenn in dem ursprünglichen Zeitfenster des flexiblen Prozessschritts (4) eine geringere Verfügbarkeit an Energie vorliegt als in dem alternativen Zeitfenster, um einen angepassten Produktionsablaufplan zu erhalten, und der Schritt des jeweiligen zeitlichen Umordnens der entsprechenden flexiblen Prozessschritte (4) abhängig von einer Wahrscheinlichkeit, die jeder prognostizierten Energie-Verfügbarkeit zugeordnet wird, durchgeführt wird, wobei insbesondere vorrangig diejenigen flexiblen Prozessschritte (4) in entsprechende Zeitfenster zeitlich umgeordnet werden, bei denen die Wahrscheinlichkeit einer Energieverfügbarkeit über der Mindest-Energieverfügbarkeit am größten ist.

8. Produktionssystem (1) mit einem oder mehreren Produktionsprozessen (3) und mit einem Produktionsplanungssystem (5) nach Anspruch 7.

9. Computerprogrammprodukt, das einen Programmcode aufweist, der, wenn er auf einer Datenverarbeitungseinheit ausgeführt wird, das Verfahren nach einem der Ansprüche 1 bis 6 ausführt.

## Claims

1. Method for adapting a production flow schedule for one or more production processes (3) which are used to produce one or more end products from one or more raw products or intermediate products and which each have one or more process steps (4) which need energy for their execution, wherein the production flow schedule is created on the basis of an optimization function which optimizes the one or the more production processes (3) with regard to one or more optimization variables, comprising the following steps:
- identifying (S2) at least one availability time window in which there is a predefined minimum energy availability within a predefined optimization time period, based on availability information which indicates a forecast energy availability during the optimization time period, and **characterized by**
- ascertaining (S3) those process steps (4) which have time flexibility as flexible process steps (4), which can be executed in alternative time windows within the optimization time period, without at least one of the optimization variables deviating by more than one optimization variable tolerance value from a value of the optimization variable which is achieved by the original production flow schedule; and
- for each of the flexible process steps (4), rescheduling (S6) the flexible process step (4) into one of the corresponding alternative time windows if the latter lies within the availability time window and if, in the original time window of the flexible process step (4), there is a lower availability of energy than in the alternative time window, in order to obtain an adapted production flow schedule, and
- the step of the respective rescheduling of the corresponding flexible process steps (4) being carried out depending on a probability which is assigned to each forecast energy availability, wherein, in particular, priority is given to rescheduling those flexible process steps (4) into corresponding time windows in which the probability of an energy availability above the minimum energy availability is the highest.

2. Method according to Claim 1, wherein the predefined minimum availability is determined by an availability threshold value which, in particular, corresponds to an average of the forecast availabilities within the optimization time period.

3. Method according to Claim 1 or 2, wherein the energy availability indicates the excess of electrical energy in a power network.

4. Method according to one of Claims 1 to 4, wherein the alternative time window of a process step (4) is determined on the basis of a state variable of the process step (4).

5. Method according to one of Claims 1 to 4, wherein, in the decision about those process steps (4) of which the execution can be shifted flexibly between alternative time windows, account is also taken as to whether the process steps can be interrupted during the progress of the individual process step.

6. Method according to one of Claims 1 to 5, wherein, in the step of the respective rescheduling of the corresponding flexible process steps (4), priority is given to taking into account those flexible process steps (4) which have the highest power consumption.

7. Production planning system (5) for adapting a production flow schedule for one or more production processes (3) which are used to produce one or more end products from one or more raw products or intermediate products and which each have one or more process steps (4) which need energy for their execution, wherein the production planning system (5) is designed:
- to create the production flow schedule on the basis of an optimization function which optimizes the one or the more production processes (3) with regard to one or more optimization variables,
- to identify at least one availability time window in which there is a predefined minimum energy availability within a predefined optimization time period, based on availability information which indicates a forecast energy availability during the optimization time period, and **characterized in that**
- to ascertain those process steps (4) which have time flexibility as flexible process steps, which can be executed in alternative time windows within the optimization time period, without at least one of the optimization variables deviating by more than an optimization variable tolerance value from a value of the optimization variable which is achieved by the original production flow schedule; and
- for each of the flexible process steps (4), to reschedule the flexible process step (4) into one of the corresponding alternative time windows if the latter lies within the availability time window and if, in the original time window of the flexible process step (4), there is a lower availability of energy than in the alternative time window, in order to obtain an adapted production flow schedule, and the step of the respective rescheduling of the corresponding flexible process steps (4) being carried out depending on a probability which is assigned to each forecast energy availability, wherein, in particular, priority is given to rescheduling those flexible process steps (4) into corresponding time windows in which the probability of an energy availability above the minimum energy availability is the highest.

8. Production system (1) having one or more production processes (3) and having a production planning system (5) according to Claim 7.

9. Computer program product which has program code which carries out the method according to one of Claims 1 to 6 when it is executed on a data processing unit.

## Revendications

1. Procédé d'ajustement d'un plan de déroulement de production destiné à au moins un processus de production (3) servant à produire au moins un produit fini à partir d'au moins un produit brut ou intermédiaire et comportant chacun au moins une étape de processus (4) dont l'exécution nécessite de l'énergie, le plan de déroulement de production étant créé en fonction d'une fonction d'optimisation qui optimise l'au moins un processus de production (3) quant à au moins une grandeur d'optimisation, le procédé comprenant les étapes suivantes :
- identifier (S2) au moins une fenêtre temporelle de disponibilité dans laquelle une disponibilité en énergie minimale prescrite est présente pendant une période d'optimisation prescrite sur la base d'une information de disponibilité indiquant une disponibilité en énergie prédite pendant la période d'optimisation,
et **caractérisé par** les étapes suivantes
- déterminer (S3) les étapes de processus (4), qui présentent une flexibilité temporelle, comme étapes de processus (4) flexibles pouvant être exécutées dans des fenêtres temporelles alternatives pendant la période d'optimisation sans qu'au moins une des grandeurs d'optimisation ne s'écarte d'une valeur de la grandeur d'optimisation, atteinte par le plan de déroulement de production d'origine, de plus d'une valeur de tolérance de grandeur d'optimisation ; et
- pour chacune des étapes de processus flexibles (4), réorganiser temporellement (S6) l'étape de processus flexible (4) dans l'une des fenêtres temporelles alternatives correspondantes si celle-ci se situe dans la fenêtre temporelle de disponibilité et si une disponibilité en énergie présente dans la fenêtre temporelle d'origine de l'étape de processus (4) flexible est plus faible que celle présente dans la fenêtre temporelle alternative pour obtenir un plan de déroulement de production adapté, et
- réaliser l'étape de réorganisation temporelle respective des étapes de processus (4) flexibles correspondantes en fonction d'une probabilité associée à chaque disponibilité en énergie prédite,
en particulier en priorité les étapes de processus flexibles (4), dans lesquelles la probabilité de disponibilité en énergie au-dessus de la disponibilité en énergie minimale est la plus grande, étant réorganisées temporellement en fenêtres temporelles correspondantes.

2. Procédé selon la revendication 1, la disponibilité minimale prescrite est déterminée par un seuil de disponibilité qui correspond notamment à une valeur moyenne des disponibilités prédites pendant la période d'optimisation.

3. Procédé selon la revendication 1 ou 2, la disponibilité en énergie indique l'excès d'énergie électrique dans un réseau électrique.

4. Procédé selon l'une des revendications 1 à 4, les fenêtres temporelles alternatives d'une étape de processus (4) étant déterminées en fonction d'une grandeur d'état de l'étape de processus (4).

5. Procédé selon l'une des revendications 1 à 4, l'interruption éventuelle des étapes de processus pendant le déroulement de l'étape de processus individuelle étant également prise en compte dans la décision relative aux étapes de processus (4) dont la mise en œuvre peut être déplacée de manière flexible entre différentes fenêtres temporelles.

6. Procédé selon l'une des revendications 1 à 5, la priorité étant donnée, dans l'étape de réorganisation temporelle respective des étapes de processus (4) flexibles correspondantes, aux étapes de processus (4) flexibles qui ont la plus grande consommation d'énergie.

7. Système de planification de production (5) permettant d'adapter un plan de déroulement de production à au moins un processus de production (3) servant à produire au moins un produit fini à partir d'au moins un produit brut ou intermédiaire et comportant chacun au moins une étape de processus (4) dont la réalisation nécessite de l'énergie,
le système de planification de production (5) étant conçu :
- pour créer le plan de déroulement de production en fonction d'une fonction d'optimisation qui optimise l'au moins un processus de production (3) quant à au moins une grandeur d'optimisation,
- pour identifier au moins une fenêtre temporelle de disponibilité dans laquelle une disponibilité en énergie minimale prescrite est présente pendant une période d'optimisation prescrite sur la base d'une information de disponibilité indiquant une disponibilité en énergie prédite pendant la période d'optimisation,
et **caractérisé en ce que** :
- pour déterminer les étapes de processus (4), qui présentent une flexibilité temporelle, comme étapes de processus flexibles pouvant être exécutées dans des fenêtres temporelles alternatives pendant la période d'optimisation sans qu'au moins une des grandeurs d'optimisation ne s'écarte d'une valeur de la grandeur d'optimisation, atteinte par le plan de déroulement de production d'origine, de plus d'une valeur de tolérance de grandeur d'optimisation ; et
- pour réorganiser temporellement, pour chacune des étapes de processus flexibles (4), l'étape de processus (4) flexible dans l'une des fenêtres temporelles alternatives correspondantes si celle-ci se situe dans la fenêtre temporelle de disponibilité et si une disponibilité en énergie présente dans la fenêtre temporelle d'origine de l'étape de processus (4) flexible est plus faible que celle présente dans la fenêtre temporelle alternative pour obtenir un plan de déroulement de production adapté, et l'étape de réorganisation temporelle respective des étapes de processus flexibles correspondantes (4) est réalisée en fonction d'une probabilité associée à chaque disponibilité en énergie prédite, en particulier en priorité les étapes de processus (4) flexibles, dans lesquelles la probabilité de disponibilité en énergie au-dessus de la disponibilité en énergie minimale est la plus grande, étant réorganisées temporellement en fenêtres temporelles correspondantes.

8. Système de production (1) comprenant au moins un processus de production (3) et un système de planification de production (5) selon la revendication 7.

9. Progiciel comprenant un code de programme qui, lorsqu'il est exécuté sur une unité de traitement de données, met en œuvre le procédé selon l'une des revendications 1 à 6.
